# EUROPÄISCHE PATENTSCHRIFT

(11) **EP 0 933 109 B1**
(45) Veröffentlichungstag und Bekanntmachung des Hinweises auf die Patenterteilung: **24.03.2004**
(21) Anmeldenummer: 98114438.9
(22) Anmeldetag: 01.08.1998
(51) Int. Cl.: B01D 19/00, F24D 19/08

(54) **Vorrichtung zum Entgasen von flüssigen Medien**
Apparatus for de-gasing liquid media
Dispositif pour le dégazage de milieux liquides

(30) Priorität: 28.01.1998 DE 19803980
(43) Veröffentlichungstag der Anmeldung: 04.08.1999
(73) Patentinhaber: Reflex Winkelmann GmbH + Co. KG, 59227 Ahlen (DE)
(72) Erfinder: Uhlmann, Dietrich, 09376 Oelsnitz (DE); Dr-Ing. Karin Rühling, 01259 Dresden (DE); Norbert Wünsche, 02692 Grosspostwitz (DE)
(74) Vertreter: Meinke, Dabringhaus und Partner GbR, Patentanwälte

(56) Entgegenhaltungen:
- EP-A- 0 461 515
- EP-A- 0 492 801
- EP-A- 0 781 583
- DE-A- 19 739 142
- DE-C- 4 430 799
- DE-U- 8 912 549
- GB-A- 984 307
- GB-A- 2 061 755

## Beschreibung

Die Erfindung betrifft ein Verfahren zum Entgasen von in flüssigen Medien, insbesondere in Wasser, gelösten Gasen in einem Unterdruckbehälter sowie eine Vorrichtung zur Durchführung eines solchen Verfahrens.

Im praktischen Betrieb von Anlagen mit Medienkreisläufen, insbesondere in Heizungs-, Kälte- und Klimaanlagen, gelangen häufig gelöste und freie Gase über die Mechanismen der Unterdruckbildung, Diffusion durch permeable Bauteile, über die Nachspeisung flüssigen Mediums und über biologische Prozesse in Folge von Verunreinigungen in den Medienkreislauf.

Treten diese Gase in allen Punkten des Medienkreislaufes in gelöster Form auf, bereiten sie nur dann Probleme, wenn sie chemische oder elektrochemische Reaktionen mit den Werkstoffen der betreffenden Anlage eingehen und dadurch Reaktionsprodukte entstehen, die deren Funktion beeinträchtigen. Dies gilt primär für Sauerstoff und die sekundären Reaktionsprodukte Wasserstoff, Ammoniak und Methan.

Treten in den Anlagen Bereiche auf, an denen partiell die Löslichkeitsgrenze mindestens einer Gaskomponente unterschritten wird, so bilden sich freie Gase, die zu Strömungsgeräuschen, erhöhter Erosion und Zirkulationsproblemen führen können.

Aus GB-A-984 307 ist ein Entgasungsverfahren und eine Entgasungsvorrichtung für Medienströme bekannt, insbesondere zum Entlüften von Wärmetauscherkreisläufen. Diese Vorrichtung enthält eine Rohrleitung zur Führung des flüssigen Medienstromes und einen Entgasungsbehälter, der über einen Gasablass zumindest zeitweise mit der Atmosphäre in Verbindung steht. Der Entgasungsbehälter steht dabei zumindest zeitweise über eine Zulaufleitung mit der Rohrleitung in Strömungsverbindung. Der Entgasungsbehälter enthält ferner eine Ablaufleitung mit eingeschalteter Druckpumpe, welche das flüssige Medium, das unter einem Druck unterhalb des Druckes in der Rohrleitung steht, mindestens auf den Druck in der Rohrleitung bringt.

Aus EP 0 187 683 B1 ist eine Entgasungsvorrichtung mit einem Entgasungsbehälter bekannt, der über einen Gasablass mindestens zeitweise mit der Atmosphäre in Verbindung steht.
Der Entgasungsbehälter verfügt dabei über eine Zulaufleitung und eine Ablaufleitung, die mit einer Druckpumpe verbunden sind. Die Zulaufleitung weist ein ferneinstellbares Zulaufventil auf, das von einer elektronischen Steuerung zur Entnahme einer bestimmten Menge des flüssigen Mediums geöffnet werden kann. Das entnommene flüssige Medium steht während einer von der Steuerung bestimmten Zeitspanne nach dem Schließen des Zulaufventiles unter atmosphärischem Druck.

Durch diese Druckminderung wird die in dem flüssigen Medium gelöste Gasmenge reduziert. Die Druckpumpe wird durch die elektronische Steuerung eingeschaltet, um das unter atmosphärischem Druck entgaste Medium solange in den Kreislauf und in die Rohrleitung zurückzupumpen, bis ein Druckfühler das Erreichen eines vorprogrammierten Systemdruckes im Medienstrom signalisiert.

Aus DE-U-89 12 549 ist eine weitere Entgasungsvorrichtung bekannt, bei welcher eine Entgasung in einem Unterdruckbehälter durchgeführt wird.

Aufgabe der Erfindung ist es, eine kostengünstige und einfach zu steuernde Lösung zur Entgasung von flüssigen Medien zu schaffen, wobei stabile Zu- und Abströmverhältnisse erreicht werden sollen.

Diese Aufgabe wird mit einem Verfahren zum Entgasen von in flüssigen Medien, insbesondere in Wasser gelösten Gasen, in einem Unterdruckbehälter gelöst, dem über wenigstens einen Zulauf und Ablauf das flüssige Medium zu- bzw. abgeführt wird, wobei die Zuführung über wenigstens eine Düse erfolgt, wobei der Unterdruck durch eine mit einer Steuerung verbundene Pumpe erzeugt wird, wobei die Steuerung die Pumpe so ansteuert, dass bedingt durch die Leistungsabstimmung zwischen der Pumpe, der Düse, einem Druckminderventil im Zulauf, einem Druckminderventil in einer in den Zulauf mündenden Nachspeisung und einem Überstromventil in dem Ablauf stromabwärts der Pumpe eine größere Menge an flüssigem Medium aus dem Unterdruckbehälter durch den Zulauf abgepumpt wird als durch den Zulauf hinzufließt, wobei die Steuerung die Pumpe nach dem Absaugen des flüssigen Mediums solange abschaltet, bis genügend flüssiges Medium durch den Zulauf in den Unterdruckbehälter nachgeflossen ist und die Gase durch eine Entgasungsvorrichtung aus dem Unterdruckbehälter gedrückt worden sind.

Durch diese Verfahrensführung, insbesondere durch die Leistungsabstimmung zwischen der Pumpe, der Düse, dem Druckminderventil im Zulauf und demjenigen in der Nachspeisung sowie dem Überstromventil stromabwärts der Pumpe und durch entsprechende Steuerung der Pumpe wird es ermöglicht, stabile Zu- und Abströmverhältnisse zu erreichen, so dass die Entgasung weitestgehend unabhängig vom zu entgasenden System, beispielsweise der Heizungsanlage, ist.

In vorteilhafter Ausgestaltung ist vorgesehen, dass die Steuerung den Absaug- und Auffüllvorgang kontinuierlich wiederholt.

Ferner wird die Pumpe bevorzugt so gesteuert, dass im Unterdruckbehälter beim Absaugen ein Druck nahe dem Siedepunkt herrscht.

Weiterhin ist es zweckmäßig, dass die als Peilrohrentgasung ausgebildete Entgasungsvorrichtung die Gase in Abhängigkeit vom Umgebungsdruck entläßt, wenn der Umgebungsdruck kleiner als der Druck im Unterdruckbehälter ist.

Zur Lösung der eingangs gestellten Aufgabe schlägt die Erfindung auch eine Vorrichtung zur Durchführung des vorbeschriebenen Verfahrens mit einem Unterdruckbehälter mit wenigstens einem Zulauf und Ablauf für das flüssige Medium vor, wobei der Zulauf in wenigstens eine Düse mündet, die innerhalb des Unterdruckbehälters angeordnet ist, wobei im Ablauf eine Pumpe zur Erzeugung des Unterdruckes im Unterdruckbehälter vorgesehen ist, die mit einer Steuerung verbunden ist, wobei im Zulauf ein Druckminderventil, in einer in den Zulauf mündenden Nachspeisung ein Druckminderventil und im Ablauf stromabwärts der Pumpe ein Überstromventil vorgesehen sind, wobei der Unterdruckbehälter mit einer Entgasungsvorrichtung versehen ist.

In bevorzugter Ausgestaltung ist die Entgasungsvorrichtung eine Peilrohrentgasung, wobei die Peilrohrentgasung bevorzugt ein gegenüber dem Unterdruckbehälter höhenverstellbares Tauchrohr aufweist.

Düse 14 ist an einem Düsenstock 13 befestigt. Die Düse 14 ist mit einem Zulauf 35 verbunden, wodurch flüssiges Medium 37 in Form eines Mediumstrahls 33 in den Unterdruckbehälter 11 gelangt. Hierbei strahlt die Düse 14 das flüssige Medium vorzugsweise gegen die Behälterinnenwand 18, auf der dadurch ein Flüssigkeitsfilm 32 entsteht.

Durch entgasungsfördernde, vorzugsweise eingebaute Mittel 11.1, beispielsweise Gitter, Umlenkbleche, Prallbleche usw., werden weitere Effekte, z.B. Sperreffekte, erhöhte Blasenkeimbildung oder eine Verlängerung des Strömungsweges erzeugt. Durch diese Maßnahmen wird die Oberfläche des flüssigen Mediums 37, vorzugsweise Heizungswasser, vergrößert. Die Desorption der Gase 38 wird dadurch beschleunigt.

Zusätzlich wird mit einer Pumpe 12, die in einem Ablauf 36 angeordnet ist, ein Unterdruck p3 im Unterdruckbehälter 11 erzeugt. Der Unterdruck p3 bemißt sich am Druck p2 im Zulauf 35 bzw. am Druck p5 im Medienkreislauf 23 sowie an der Durchflußleistung der Düse 14 und der Förderleistung der Pumpe 12.

Eine Steuerung 31 schaltet die Pumpe 12 dann ab, wenn das flüssige Medium 37 aus dem Unterdruckbehälter 11 gesaugt wurde. Die Steuerung 31 überwacht hierbei entweder einen - nicht dargestellten - Sensor oder das Trockenlaufen der Pumpe 12. Sobald das Medium 37 abgesaugt ist, schaltet die Steuerung 31 die Pumpe 12 ab.

Der Unterdruck p3 im Unterdruckbehälter 11 sorgt durch den Zulauf 35 für eine ausreichende Nachspeisung an flüssigem Medium 37. Ein Rückschlagventil 27, das im Ablauf 36 angeordnet ist, verhindert den Rücklauf von entgastem Medium 37.

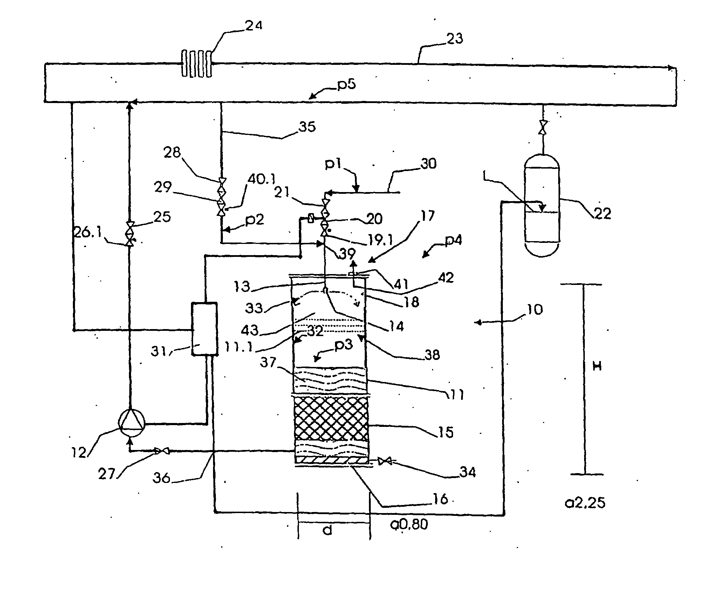

Die Erfindung ist nachstehend anhand der Zeichnung beispielhaft näher erläutert. Diese zeigt in der einzigen Figur ein Verfahrensschema.

Eine in der Figur dargestellte Entgasungsvorrichtung 10 besteht im wesentlichen aus einem Unterdruckbehälter 11, der eine Behälterinnenwand 18 aufweist, der Unterdruckbehälter 11 ist über einen Zulauf 35 und einen Ablauf 36 mit einem Kreislauf 23 für ein flüssiges Medium 37, vorzugsweise Wasser, verbunden. Der Kreislauf 23, z.B. ein Heizwasserkreislauf, weist mindestens einen Verbraucher 24, beispielsweise Heizkörper, auf. In den Kreislauf 23 ist ein bekanntes Druckausgleichsgefäß 22 integriert.

Der Durchmesser d und die Höhe H des Unterdruckbehälters 11 werden in Abhängigkeit des Durchsatzes an flüssigem Medium nach einem zu ermittelnden Verhältnis H/d optimal aufeinander abgestimmt.

Der Unterdruckbehälter 11 weist in seinem oberen Bereich eine oder mehrere Düsen 14 auf. Die dargestellte Der Unterdruckbehälter 11 weist im Deckelbereich eine Peilrohrentgasung 17 auf, die in Abhängigkeit vom Druck p4 in der Umgebung das Gas 38 aus dem Unterdruckbehälter 11 entweichen läßt. Sobald der Druck p4 in der Umgebung kleiner als der Druck p3 im Unterdruckbehälter 11 ist, öffnet sich die Peilrohrentgasung 17 und entläßt das Gas 38 in die Umgebung.

Nach dem Stoppen der Pumpe 12 wird das Gas 38 durch das in den Unterdruckbehälter 11 fließende Medium 37 aus der Peilrohrentgasung 17 in die Umgebung gedrückt. Der Druck p2 bzw. p5 ist vorteilhafterweise größer als der Druck p4, was aber in nahezu allen Kreislaufsystemen der Fall ist.

Die Peilrohrentgasung 17 verfügt über ein gegenüber dem Unterdruckbehälter 11 verschiebbares Tauchrohr 42. Das Tauchrohr 42 ist mit einer lösbaren Überwurfmutter 41 in dem Unterdruckbehälter 11 gehalten und kann in Abhängigkeit von der Anfangshöhe des flüssigen Mediums 37 in dem Sprühraum 43 variabel eingestellt werden. Der erzielbare Unterdruck ist dadurch ebenfalls variabel.

Zur Vermeidung des Austritts von Medium 37 aus der Peilrohrentgasung 17 schließt sich diese bei einem vorbestimmten Mediumsstand im Unterdruckbehälter 11.

Nach dem Vollaufen des Unterdruckbehälters 11 startet die Steuerung 31 die Pumpe 12 erneut, um das flüssige Medium 37 aus dem Unterdruckbehälter 11 zu pumpen. Das erneute Starten der Pumpe 12 kann durch einen - nicht dargestellten Sensor - oder durch eine Zeitsteuerung erfolgen.

Die Steuerung 31 regelt über eine Nachspeisung 30 zusätzlich den Zufluß von nachzuspeisendem Heizungswasser. Die Nachspeisung 30 steht unter einem Druck p1 und ist über eine Einmündung 39 mit dem Zulauf 35 verbunden. Hierdurch wird das nachgespeiste flüssige Medium, bevor es in den Medienkreislauf 23 geleitet wird, entgast. Zur Vermeidung des direkten Einlaufens von nachgespeistem Medium in den Medienkreislauf 23, weist der Zulauf 35 ein Rückschlagventil 29 auf.

Die Steuerung 31 regelt bei Anlagen mit Membrandruckausdehnungsgefäßen vorzugsweise in Abhängigkeit vom Druck p5 im Kreislauf 23 des flüssigen Mediums 37. Vorzugsweise bei Druckhaltestationen kann die Regelung auch in Abhängigkeit vom Füllstand L im Druckausgleichsgefäß 22 erfolgen. Der Nachfluß an nachgespeistem Wasser kann durch die Wassernachspeisung 30 über ein Magnetventil 20 erfolgen. Fällt der Druck p5 bzw. der Füllstand L unter einen vorgegebenen Sollwert, so wird das Magnetventil 20 geöffnet.

Der Zulauf 35, der Ablauf 36 und die Nachspeisung 30 weisen Absperrarmaturen 21, 28 und 25 auf, mit denen der Flüssigkeitsstrom unterbrochen werden kann. Zusätzlich sind ein Druckminderventil 19.1 und ein Überströmventil 26.1 vorgesehen, die eine Veränderung des Drucks erlauben. Durch den Einbau des Überströmventils 26.1 kann die Fördermenge der Pumpe 12 auf einen annähernd konstanten Wert eingestellt werden. Zusammen mit den Druckminderventilen 19.1 und 40.1 können somit stabile Zu- und Abströmverhältnisse erreicht werden.

Insbesondere bei Heizungsanlagen wird durch Vorwärmung des Mediums 37 durch den Zulauf 35 der Entgasungseffekt im Unterdruckbehälter 11 verstärkt. Dazu ist in dem Zulauf 35 für neues flüssiges Medium 37 eine Nachspeisung 30 vorgesehen, die über Druckminderventile 19.1 und/oder 40.1 das Mischungsverhältnis des neuen und alten Mediums 37 regelt. Das Druckminderventil 19.1 wird dabei auf einen Druck unterhalb des Druckes p5 eingestellt. Damit wird das Nachspeisen von unentgastem Wasser 37 über den Unterdruckbehälter 11 in den Flüssigkeitskreislauf 23 vermieden.

In seinem unteren Bereich weist der Unterdruckbehälter 11 einen Eisenspanfilter 15 auf, der den Entgasungseffekt verstärkt. Der Eisenspanfilter 15 ist mit Eisenspänen gefüllt und verbessert die Oxidation über der freien Oberfläche.

Der Unterdruckbehälter 11 ist zusätzlich am Boden mit einem Schlammbereich 16 versehen, in dem Ablagerungen aufgefangen werden, die durch ein Ablaßventil 34 abgeführt werden.

Zur Verbesserung des Entgasungseffekts wird beim Nachspeisen von flüssigem Medium 30, gezielt Wasser aus dem Wasserkreislauf 35 an der Einmündung 39 beigemischt. Insbesondere bei Heizungsanlagen wird durch die damit verbundene Aufheizung des Heizungswassers 30 der Entgasungseffekt verstärkt. Das Verhältnis der Flüssigkeitsströme 30 und 35 wird hierbei über Druckminderventile 19.1 und 40.1 eingestellt.

Durch die Einregulierung der Druckminderventile 19.1 und 40.1 auf einen vorgegebenen Druck p2 ist eine optimale Einstellung der Leistung der Düsen 14 gegeben. Das Druckminderventil 19.1 wird unterhalb des Druckes p5 eingestellt. Damit wird das Nachspeisen von unentgastem Wasser 30 über den Unterdruckbehälter 11 in den Kreislauf 23 vermieden.

Bei einer Ausführungsform kann auf der Saugseite der Pumpe 12 ein Rückschlagventil 27 eingebaut sein. Durch dieses Rückschlagventil 27 wird der Gefahr von Falschlufteinbrüchen über die Gleitringdichtung der Pumpe 11 wirksam vermieden.

Bei einer weiteren Ausführungsform kann bei Verwendung einer geeigneten Pumpe 12 auf das Rückschlagventil 27 verzichtet werden. Der Gasausschub bei abgeschalteter Pumpe erfolgt dann nicht nur durch Nachfluß über die Düse 14, sondern auch durch Rücklauf von flüssigem Medium 37, nämlich Heizungswasser.

### Bezugszeichen

- 10: Entgasungsvorrichtung
- 11: Unterdruckbehälter
- 11.1: Einbauten
- 12: Pumpe
- 13: Düsenstock
- 14: Düse
- 15: Eisenspanfilter
- 16: Schlammbereich
- 17: Peilrohrentgasung
- 18: Behälterinnenwand
- 19.1: Druckminderventil
- 20: Magnetventil
- 21: Absperrarmatur
- 22: Druckausgleichsgefäß
- 23: Mediumskreislauf
- 24: Verbraucher
- 25: Absperrarmatur
- 26.1: Überströmventil
- 27: Rückschlagventil
- 28: Absperrarmatur
- 29: Rückschlagventil
- 30: Nachspeisung
- 31: Steuerung
- 32: Film
- 33: Mediumstrahl
- 34: Ablaßventil
- 35: Zulauf
- 36: Ablauf
- 37: flüssiges Medium
- 38: Gas
- 39: Einmündung
- 40.1: Druckminderventil
- 41: Überwurfmutter
- 42: Tauchrohr
- 43: Sprühraum
- p1: Druck
- p2: Druck im Zulauf
- p3: Behälterdruck
- p4: Umgebungsdruck
- p5: Kreislaufdruck
- L: Wasserstand
- d: Durchmesser des Unterdruckbehälters
- H: Höhe des Unterdruckbehälters

## Patentansprüche

1. Verfahren zum Entgasen von in flüssigen Medien, insbesondere in Wasser gelösten Gasen, in einem Unterdruckbehälter (11), dem über wenigstens einen Zulauf (35) und Ablauf (36) das flüssige Medium zu- bzw. abgeführt wird, wobei die Zuführung über wenigstens eine Düse (14) erfolgt, wobei der Unterdruck durch eine mit einer Steuerung (31) verbundene Pumpe (12) erzeugt wird, wobei die Steuerung (31) die Pumpe (12) so ansteuert, dass bedingt durch die Leistungsabstimmung zwischen der Pumpe (12), der Düse (14), einem Druckminderventil (40.1) im Zulauf (35), einem Druckminderventil (19.1) in einer in den Zulauf (35) mündenden Nachspeisung (30) und einem Überstromventil (26.1) in dem Ablauf (36) stromabwärts der Pumpe (12) eine größere Menge an flüssigem Medium (37) aus dem Unterdruckbehälter (11) durch den Ablauf (36) abgepumpt wird, als durch den Zulauf (35) hinzufließt, wobei die Steuerung (31) die Pumpe (12) nach dem Absaugen des flüssigen Mediums (37) so lange abschaltet, bis genügend flüssiges Medium (37) durch den Zulauf (35) in den Unterdruckbehälter (11) nachgeflossen ist und die Gase (38) durch eine Entgasungsvorrichtung (17) aus dem Unterdruckbehälter (11) gedrückt worden sind.

2. Verfahren nach Anspruch 1,
**dadurch gekennzeichnet,**
**dass** die Steuerung (31) den Absaug- und Auffüllvorgang kontinuierlich wiederholt.

3. Verfahren nach Anspruch 1 oder 2,
**dadurch gekennzeichnet,**
**dass** die Pumpe (12) so gesteuert wird, dass im Unterdruckbehälter (11) beim Absaugen ein Druck (p₃) nahe dem Siedepunkt herrscht.

4. Verfahren nach einem oder mehreren der Ansprüche 1 bis 3,
**dadurch gekennzeichnet,**
**dass** die als Peilrohrentgasung (17) ausgebildete Entgasungsvorrichtung die Gase (38) in Abhängigkeit vom Umgebungsdruck (p₄) entläßt, wenn der Umgebungsdruck (p₄) kleiner als der Druck (p₃) im Unterdruckbehälter (11) ist.

5. Vorrichtung zur Durchführung des Verfahrens nach einem oder mehreren der Ansprüche 1 bis 4, mit einem Unterdruckbehälter (11) mit wenigstens einem Zulauf (35) und Ablauf (36) für das flüssige Medium, wobei der Zulauf (35) in wenigstens eine Düse (14) mündet, die innerhalb des Unterdruckbehälters (11) angeordnet ist, wobei im Ablauf (36) eine Pumpe (12) zur Erzeugung des Unterdruckes im Unterdruckbehälter (11) vorgesehen ist, die mit einer Steuerung (31) verbunden ist, wobei im Zulauf (35) ein Druckminderventil (40.1), in einer in den Zulauf (35) mündenden Nachspeisung (30) ein Druckminderventil (19.1) und im Ablauf (36) stromabwärts der Pumpe (12) ein Überstromventil (26.1) vorgesehen sind, wobei der Unterdruckbehälter (11) mit einer Entgasungsvorrichtung (17) versehen ist.

6. Vorrichtung nach Anspruch 5,
**dadurch gekennzeichnet,**
**dass** die Entgasungsvorrichtung eine Peilrohrentgasung (17) ist.

7. Vorrichtung nach Anspruch 6,
**dadurch gekennzeichnet,**
**dass** die Peilrohrentgasung (17) ein gegenüber dem Unterdruckbehälter (11) höhenverstellbares Tauchrohr (42) aufweist.

## Claims

1. Method for the degassing of gases that are dissolved in liquid media, in particular in water, in a vacuum tank (11), to or from which the liquid medium is supplied or drained via at least one inlet (35) and outlet (36), wherein admission is via at least one nozzle (14), wherein the negative pressure is created by a pump (12) connected to a control unit (31), wherein the control unit (31) controls the pump (12) in such a way that conditional upon the operational balancing between the pump (12), the nozzle (14), a pressure reducing valve (40.1) in the inlet (35), a pressure reducing valve (19.1) in a feed device (30) that opens into the inlet (35), and an overflow valve (26.1) in the outlet (36) downstream of the pump (12), a larger amount of liquid medium (37) is pumped out of the vacuum tank (11) through the outlet (36) than flows in through the inlet (35), wherein after the suction extraction of the liquid medium (37), the control unit (31) switches off the pump (12) until sufficient liquid medium (37) has flowed through the inlet (35) into the vacuum tank (11) and the gases (38) have been pressed out of the vacuum tank (11) by a degassing appliance (17).

2. Method in accordance with claim 1, **characterised in that** the control unit (31) repeats the suction extraction and filling procedure continuously.

3. Method in accordance with claim 1 or 2, **characterised in that** the pump (12) is controlled in such a way that during suction extraction a pressure (P₃), close to the boiling point, is in force in the vacuum tank (11)..

4. Method in accordance with one or more of the claims 1 to 3, **characterised in that** the degassing appliance which is designed as a gauge pipe degassing appliance (17) discharges the gases (38) depending on the ambient pressure (P₄), when the ambient pressure (P₄) is less than the pressure (P₃) in the vacuum tank (11).

5. Arrangement for carrying out the method in accordance with one or more of the claims 1 to 4, with a vacuum tank (11) with at least one inlet (35) and outlet (36) for the liquid medium, wherein the inlet (35) opens into at least one nozzle (14) which is arranged within the vacuum tank (11), wherein provided in the outlet (36) is a pump (12) to create the negative pressure in the vacuum tank (11), which [pump] is connected to a control unit (31), wherein provided in the inlet (35) is a pressure reducing valve (40.1), provided in the feed device (30) that opens into the inlet (35) is a pressure reducing valve (19.1), and provided in the outlet (36) downstream of the pump (12) is an overflow valve (26.1), wherein the vacuum tank (11) is equipped with a degassing appliance (17).

6. Arrangement in accordance with claim 5, **characterised in that** the degassing appliance is a gauge pipe degassing appliance (17).

7. Arrangement in accordance with claim 6, **characterised in that** the gauge pipe degassing appliance (17) has an immersion pipe (42) that is height-adjustable in relation to the vacuum tank (11).

## Revendications

1. Procédé pour le dégazage de gaz dissous dans des substances liquides, en particulier dans l'eau, dans une chambre à dépression (11) à laquelle la substance liquide est amenée et de laquelle elle est évacuée, respectivement, par au moins une amenée (35) et une évacuation (36), où l'acheminement s'effectue au moyen d'au moins une buse (14), où la dépression est produite au moyen d'une pompe (12) combinée à une commande (31), où la commande (31) commande la pompe (12) de telle sorte que, en fonction de l'adaptation de charge entre la pompe (12), la buse (14), une soupape de réduction de pression (40.1) dans l'amenée (35), une soupape de réduction de pression (19.1) dans une réalimentation (30) débouchant dans l'amenée (35) et une soupape de décharge (26.1) dans l'évacuation (36) en aval de la pompe (12), une plus grande quantité de substance liquide (37) est pompée à partir de la chambre à dépression (11) au moyen de l'évacuation (36) que la quantité acheminée au moyen de l'amenée (35), où la commande (31) arrête la pompe (12) après l'aspiration de la substance liquide (37) jusqu'à ce qu'une quantité suffisante de substance liquide (37) se soit déversée dans la chambre à dépression (11) au moyen de l'amenée (35) et que les gaz (38) aient été expulsés hors de la chambre à dépression (11) au moyen d'un dispositif de dégazage (17).

2. Procédé selon la revendication 1, **caractérisé en ce que** la commande (31) répète en permanence l'opération d'aspiration et de remplissage.

3. Procédé selon la revendication 1 ou 2, **caractérisé en ce que** la pompe (12) est commandée de telle sorte qu'une pression (P₃) proche du point d'ébullition règne dans la chambre à dépression (11) pendant l'aspiration.

4. Procédé selon l'une ou plusieurs des revendications 1 à 3, **caractérisé en ce que** le dispositif de dégazage réalisé comme dégazage à tuyau de sonde (17) laisse s'échapper les gaz (38) en fonction de la pression ambiante (P₄) lorsque la pression ambiante (P₄) est inférieure à la pression (P₃) dans la chambre à dépression (11).

5. Dispositif pour la réalisation du procédé selon l'une ou plusieurs des revendications 1 à 4, comprenant une chambre à dépression (11) ayant au moins une amenée (35) et une évacuation (36) pour la substance liquide, où l'amenée (35) débouche dans au moins une buse (14) qui est agencée à l'intérieur de la chambre de dépression (11), où il est prévu dans l'évacuation (36) une pompe (12) pour produire la dépression dans la chambre à dépression (11), laquelle est reliée à une commande (31), où il est prévu dans l'amenée (35) une soupape de réduction de pression (40.1), dans une réalimentation (30) débouchant dans l'amenée (35) une soupape de réduction de pression (19.1), et dans l'évacuation (36) en aval de la pompe (12) une soupape de décharge (26.1), et où la chambre à dépression (11) est munie d'un dispositif de dégazage (17).

6. Dispositif selon la revendication 5, **caractérisé en ce que** le dispositif de dégazage est un dégazage à tuyau de sonde (17).

7. Dispositif selon la revendication 6, **caractérisé en ce que** le dégazage à tuyau de sonde (17) comprend un tube plongeur (42) réglable en hauteur par rapport à la chambre de dépression (11).
